(19) Europäisches Patentamt
European Patent Office
Office européen des brevets

(11) EP 1 961 790 A1

(12) # EUROPEAN PATENT APPLICATION
published in accordance with Art. 158(3) EPC

(43) Date of publication:
**27.08.2008 Bulletin 2008/35**

(21) Application number: **06834483.7**

(22) Date of filing: **12.12.2006**

(51) Int Cl.:
***C09D 1/00*** (2006.01) ***B05D 7/24*** (2006.01)
***C09D 5/02*** (2006.01) ***C09D 7/12*** (2006.01)
***C09D 133/00*** (2006.01) ***C09D 175/04*** (2006.01)
***C09D 183/04*** (2006.01)

(86) International application number:
**PCT/JP2006/324728**

(87) International publication number:
**WO 2007/069588 (21.06.2007 Gazette 2007/25)**

(84) Designated Contracting States:
**DE FR GB**

(30) Priority: **12.12.2005 JP 2005357496**
**27.12.2005 JP 2005374739**

(71) Applicant: **DIC Corporation**
**Tokyo 174-8520 (JP)**

(72) Inventors:
- **NAKAGUMA, Hirohide**
  **Sakura-shi, Chiba 2858668 (JP)**
- **BUEI, Hiroyuki**
  **Sakura-shi, Chiba 2858668 (JP)**
- **JIN, Ren-Hua**
  **Sakura-shi, Chiba 2858668 (JP)**
- **TANAKA, Kazunori**
  **Takaishi-shi, Osaka 5920001 (JP)**
- **NAGAO, Kenji**
  **Takaishi-shi, Osaka 5920001 (JP)**

(74) Representative: **Albrecht, Thomas**
**Kraus & Weisert**
**Thomas-Wimmer-Ring 15**
**80539 München (DE)**

(54) **AQUEOUS COATING COMPOSITION, ORGANIC/INORGANIC COMPOSITE COATING FILM AND METHOD FOR PRODUCING SAME**

(57) The object of the present invention is to provide an aqueous coating composition including: an aqueous dispersion of a cationic resin (A); a metal alkoxide or a condensation product thereof (B); and an acid catalyst (C), and an organic-inorganic composite coating film wherein particles of a cationic resin (A) are dispersed in a matrix of a metal oxide (B').

FIG. 1

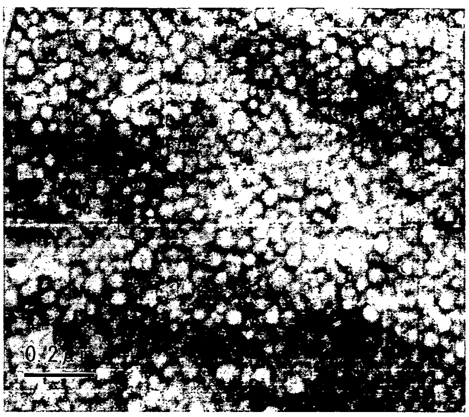

EP 1 961 790 A1

## Description

TECHNICAL FIELD

The present invention relates to an aqueous coating composition including an organic component and an inorganic component, an organic-inorganic composite coating film obtained by using the same, and the production method thereof.

BACKGROUND ART

In the field of arts such as coating materials or molding materials, there has been a great deal of attention paid to the requirement of simultaneously achieving ease of handling including flexibility or molding-processability, and resistant properties such as hardness, heat resistance or weather resistance. For example, an organic-inorganic composite of organic and inorganic polymers is known as a material that can exhibit such properties, which is generally difficult to achieve at the same time. It is assumed that such an organic-inorganic composite can simultaneously exhibit features of the organic polymer such as flexibility or molding-processability and features of the inorganic polymer such as hardness, heat resistance or weather resistance. Therefore, a silicone-modified resin obtained by modifying an organic polymer with a silicone resin (i.e. inorganic polymer) has been conventionally studied. However, it is difficult to increase the content of silicone in such a silicone-modified resin. Accordingly, the features of silicone such as heat resistance or hardness cannot be sufficiently imparted to the silicone-modified resin. Furthermore, types of available silicone resins are limited and these silicone resins are expensive.

As an alternative to the above-mentioned silicone-modified resin, a method of a sol-gel process utilizing a hydrolysis-condensation reaction of an alkoxysilane can be mentioned. Specifically, in this method, hydrolysis and condensation polymerization of an alkoxysilane are simultaneously promoted in the presence of an organic polymer whereby the organic and inorganic polymers are formed into a composite.

As an example of such a method, a method wherein an alcohol sol solution containing a polyurethane and a hydrolytic alkoxysilane is coated on the substrate, and this is dried to produce an organic-inorganic composite coating film is proposed (for example, see Patent Document 1). The mechanism thereof is based on the fact that, while the alkoxysilane is formed into silica fine particles due to water content, etc. in the atmosphere during drying after coating the solution, silanol groups on the surface of the particles and the polyurethane form a hydrogen bond or ester bond whereby these are formed into a composite. Consequently, a coating film wherein the silica particles are uniformly dispersed in a matrix of the polyurethane can be obtained. However, this method has a considerable negative influence on the environment because the method uses an alcohol, namely an organic solvent. Furthermore, because the method utilizes water content in the atmosphere, properties of the obtained composite (coating film) will vary with working environmental conditions (temperature, humidity or the like), and such variation in properties is a problem in practical use.

Moreover, achievement of a coating film of an organic-inorganic composite having excellent heat resistant while also retaining flexibility of a polyurethane by using a composition containing a polyurethane having a hydroxyl group and/or amino group, and a hydrolytic alkoxysilane is reported (for example, see Patent Document 2). By way of combining silica with a hard segment domain of the polyurethane, the art attempts to improve heat resistance of the entire coating film without impairing flexibility of the soft segment. However, it is obvious that the structure of the coating film is not uniform. Additionally, when the silica content is increased, phase separation easily occurs, and a composite (coating film) having excellent abrasion resistance cannot be obtained.

Furthermore, achievement of a transparent and uniform organic-inorganic composite coating film having sufficient water resistance and hardness by using a composition containing a water mixture of an organic compound having a hydroxyl group, a polyalkoxysilane, and a catalyst is reported (for example, see Patent Document 3). However, the composition has inferior storage stability because hydrolysis and condensation of the polyalkoxysilane continuously proceed during storage. Moreover, hardness of the obtained coating film is insufficient where the film just achieves a pencil hardness of about 2H to 6H, and the coating film cannot achieve abrasion resistance required in organic-inorganic composite coating films. Additionally, if a curing agent such as an aminoplast resin is not combined, it is known that the coating film thereof exhibits whitening in a hot-water-resistance test conducted at 90°C for one hour. However, use of such a curing agent further deteriorates the storage stability of the coating composition. That is to say, sufficient storage stability of the coating composition and sufficient properties of the obtained coating film cannot be achieved at the same time. Therefore, further improvements have been expected.

Patent Document 1: Japanese Unexamined Patent Publication No. H6-136321
Patent Document 2: Japanese Unexamined Patent Publication No. 2001-64346
Patent Document 3: Japanese Unexamined Patent Publication No. H8-319457

DISCLOSURE OF THE INVENTION

Concerning the above-described circumstances, the problem to be solved by the present invention is to provide an organic-inorganic composite coating film simultaneously having excellent properties such as water resistance, transparency or abrasion resistance, a production method thereof, and an aqueous coating composition that has excellent storage stability and that can achieve the organic-inorganic composite coating film.

The present inventors conducted intensive studies to solve the above-described problem. Consequently, the present inventors discovered that formation of nanoscale composite of an organic component with an inorganic component can be achieved by conducting a sol-gel reaction of a metal alkoxide in the presence of a cationic resin, and further discovered that the produced coating film of the composite had the above-mentioned properties. This resulted in the present invention.

Specifically, an aspect of the present invention is to provide an aqueous coating composition including an aqueous dispersion of a cationic resin, a metal alkoxide or a condensation product thereof, and an acid catalyst.

Furthermore, another aspect of the present invention is to provide an organic-inorganic composite coating film wherein cationic resin particles are dispersed in a matrix of a metal oxide, and a method of producing the organic-inorganic composite using simple procedures.

According to the present invention, an aqueous coating composition having excellent storage stability, containing an organic component and an inorganic component can be provided. The coating film obtained by using the aqueous coating composition is an organic-inorganic composite coating film having excellent abrasion resistance, water resistance and transparency with a suitable balance, and the production method thereof is also simple. The coating film can be utilized for various purposes such as in vehicles, building materials, wood-working, or plastic hard coating.

BRIEF DESCRIPTION OF THE DRAWINGS

Figure 1 is a transmission electron microscopic image of a cross-section structure of the organic-inorganic composite coating film 13 obtained in Example 36.

BEST MODE FOR CARRYING OUT THE INVENTION

The aqueous coating composition of the present invention contains an aqueous dispersion of a cationic resin (A), a metal alkoxide or a condensation product thereof (B), and an acid catalyst (C).

According to recent researches, it is known that many natural diatoms and sponge organisms (so-called "biosilica") protect their cells with a composite film of silica and organic substances. In particular, there has been a suggestion that silica is combined with cationic polymers or cationic proteins in such a composite film of biosilica whereby properties of the film are exhibited (W. E. G. Muller Ed., Silicon Biomineralization: Biology-Biotechnology-Molecular Biology-Biotechnology, 2003, Springer). The functions of the cationic polymers or the cationic proteins have not yet been completely elucidated. However, it is basically assumed that these have catalytic activity in the silica condensation, express a three-dimensional structure due to the silica-sol formation and sol-fusion (i.e. formation of a hybrid film having a specific structure), and have an adherence effect between the polymer and the silica in the formation of a nono-hybrid structure, among others.

A design idea based on understanding the mechanism of such biosilica is considered critical in the development of an organic-inorganic composite coating film. In particular, even though most cationic proteins combined in biosilica have a hydrophilic surface, they are characteristically water-insoluble. The present inventors focused on this property of the proteins, and had an idea of using resin particles having a cationic surface as such cationic proteins. Specifically, in the present invention, an aqueous dispersion of a cationic resin (A) is used as a cationic polymer, and a sol-gel reaction of a metal alkoxide or the condensation product thereof (B) is conducted using an acid catalyst (C) in the presence of the cationic resin whereby fine particles of the cationic resin as an organic component can be highly composited with a matrix of a metal oxide obtained from the metal alkoxide or the condensation product thereof as an inorganic component. The present inventors discovered this fact and achieved the present invention.

In the aqueous coating composition of the present invention, initial hydrolysis of the metal alkoxide or the condensation product thereof (B) is promoted by the catalyst (C). However, the condensation reaction after that is suppressed by the cationic resin (A), and the entire system is controlled by ionic interaction between hydroxyl groups on the surface of the metal sol and cations on the surface of resin fine particles of the aqueous dispersion of the cationic resin (A). Consequently, growth of sol terminates at a certain level, and anionic sol is concentrated on the surface of fine particles of the aqueous dispersion of the cationic resin (A) whereby an aqueous dispersion solution having excellent stability can be obtained. When this aqueous dispersion solution is coated, a gelled film having a continuous phase of

the metal oxide is formed. Accordingly, each single resin fine particle of the cationic resin (A) is uniformly dispersed and combined in the continuous phase without forming aggregations thereof whereby a coating film having a nanoscale repeating structure thereof can be obtained. The above-obtained coating film maximally exhibits composite effects of the organic component and the inorganic component, and physical properties of the coating film such as abrasion resistance or water resistance can be significantly improved. The above-described structure and the effects derived from the structure can not be obtained by using an anionic resin aqueous dispersion or an nonionic resin aqueous dispersion.

Hereinafter, materials used in the present invention will be described in detail.

[Cationic resin (A)]

The cationic resin (A) used in the present invention is an organic compound that includes a cationic functional group and that forms an aqueous dispersion being stably dispersed in an aqueous medium. The aqueous medium is not particularly limited as long as the medium is a uniform medium mainly containing water. Examples of such a medium include a medium where an alcohol-based water-soluble organic solvent such as methanol, ethanol, isopropanol or butanol is mixed with water; or a medium where an ether-based water-soluble organic solvent such as tetrahydrofuran or butyl cellosolve is mixed with water. In particular, the most preferable aqueous medium is a mixed medium of isopropanol and water. Additionally, the amount of the water-soluble organic solvent is preferably 50% by mass or less with respect to the amount of water included in the aqueous coating composition.

The cationic resin (A) is a cationic resin that disperses in the aqueous medium. The average particle diameter of the dispersed resin particles is preferably within a range of 0.005 $\mu$m to 1 $\mu$m, and more preferably within a range of 0.01 $\mu$m to 0.4 $\mu$m because the produced coating film can have sufficient abrasion resistance and transparency.

Examples of the cationic functional group include a primary, secondary or tertiary amino group, a reaction product of a phosphino group with an acid such as hydrochloric acid, nitric acid, acetic acid, sulfuric acid, propionic acid, butyric acid, (meth)acrylic acid or maleic acid, a quaternary ammonium group, or a quaternary phosphonium group.

The content of the cationic functional group is not particularly limited as long as the cationic resin (A) is not dissolved in the aqueous medium, thereby forming a stable dispersion. Specifically, depending on properties, structures or the like such as molecular weight, degree of branching, etc. of the cationic resin (A) other than the cationic functional group included therein, a preferable content of the cationic functional group will vary. However, in general, if 0.01 to 1 cationic equivalent/kg of the cationic functional group is included in the solid content of the cationic resin (A), an aqueous dispersion can be produced. In particular, 0.02 to 0.8 equivalents/kg thereof is preferably included therein, and 0.03 to 0.6 equivalents/kg is more preferably included therein because the balance between dispersing properties of the cationic resin (A) in the aqueous medium and water resistance of the coating film is excellent.

The number average molecular weight (Mn) of the cationic resin (A), which is calculated from a polystyrene equivalent obtained by gel permeation chromatography (GPC), is not particularly limited as long as the cationic resin (A) is not dissolved in the aqueous medium to form a stable dispersion. The number average molecular weight thereof is generally within a range of 1,000 to 5,000,000, and preferably within a range of 5,000 to 1,000,000.

The type of the cationic resin (A) is not particularly limited. For example, a polyvinyl-based polymer such as a polyacrylate or polystyrene, or typical polymers such as a polyurethane, polyester or polyepoxy can be used.

In particular, use of a polyurethane or polyacrylate is more preferable in terms of ease of its production, and its compatibility with a metal oxide (B') described below. Hereinafter, these are referred to as a "cationic urethane resin (A-1)" and a "cationic acrylic resin (A-2)".

The cationic urethane resin (A-1) is a urethane resin having a cationic functional group that is obtained from a polyisocyanate, a polyol and a chain-extending agent which is used if required.

Examples of the polyisocyanate used as a material for producing the cationic urethane resin (A-1) include an organic polyisocyanate such as a chain aliphatic polyisocyanate, alicyclic polyisocyanate, aromatic polyisocyanate, aromatic-aliphatic polyisocyanate or a polyisocyanate obtained from amino-acid derivatives.

Examples of the chain aliphatic polyisocyanate include methylene diisocyanate, isopropylene diisocyanate, butane-1,4-diisocyanate, hexamethylene diisocyanate, 2,2,4-trimethyl hexamethylene diisocyanate, 2,4,4-trimethyl hexamethylene diisocyanate, or a dimer acid diisocyanate where a carboxyl group included in the dimer acid is substituted with an isocyanate group.

Examples of the alicyclic polyisocyanate include cyclohexane-1,4-diisocyanate, isophorone diisocyanate, dicyclohexylmethane-4,4'-diisocyanate, 1,3-di(isocyanatomethyl)cyclohexane, or methylcyclohexane diisocyanate.

Examples of the aromatic polyisocyanate include a dialkyldiphenylmethane diisocyanate such as 4,4'-diphenyldimethylmethane diisocyanate; a tetraalkyldiphenylmethane diisocyanate such as 4,4'-diphenyltetramethylmethane diisocyanate; 1,5-naphthylene diisocyanate; 4,4'-diphenylmethane diisocyanate; dibenzyl-4,4'-diisocyanate; 1,3-phenylene diisocyanate; 1,4-phenylene diisocyanate; 2,4-tolylene diisocyanate; or 2,6-tolylene diisocyanate.

Examples of the aromatic-aliphatic polyisocyanate include xylylene diisocyanate, or m-tetramethyl xylylene

diisocyanate. Examples of the polyisocyanate obtained from an amino-acid derivative include lysine diisocyanate.

As the polyol used as a material for the cationic urethane resin (A-1), various types of compounds having two or more hydroxyl groups in one molecule can be mentioned. A high-molecular-weight polyol is preferable because the obtained organic-inorganic composite coating film has excellent flexibility. Such a high-molecular-weight polyol includes, for example, (1) polyether polyols such as a polymer or copolymer of ethylene oxide, propylene oxide, isobutylene oxide or tetrahydrofuran; (2) polyester polyols obtained by dehydration condensation of (i) a low-molecular-weight saturated or unsaturated glycol (such as ethylene glycol, diethylene glycol, triethylene glycol, 1,2-propanediol, 1,3-propanediol, 1,3-butanediol, 1,4-butanediol, neopentyl glycol, pentanediol, 3-methyl-1,5-pentanediol, 1,6-hexanediol, octanediol, 1,4-butynediol, or dipropylene glycol), (ii) an alkyl glycidyl ether (such as n-butyl glycidyl ether, or 2-ethylhexyl glycidyl ether), or (iii) a glycidyl ester of monocarboxylic acid (such as glycidyl esters of "versatic acid") with (i) a dibasic acid (such as adipic acid, maleic acid, fumaric acid, phthalic acid anhydride, isophthalic acid, terephthalic acid, succinic acid, oxalic acid, malonic acid, glutaric acid, pimelic acid, azelaic acid, sebacic acid, or suberic acid), acid anhydrides thereof, or dimer acids thereof; (3) polyester polyols obtained by ring-opening polymerization of a cyclic ester compound; (4) polycarbonate polyols; (5) polyolefin diols (such as polybutadiene diol, polyisoprene diol, polychloroprene diol, hydrogenated polybutadiene glycol, or hydrogenated polyisoprene glycol); (6) glycols obtained by adding ethylene oxide or propylene oxide to bisphenol A; (7) macromonomers such as an acrylic polymer obtained by polymerizing radical-polymerizable unsaturated monomers (such as an alkyl (meth)acrylate) in the presence of a chain transfer agent having two or more hydroxyl groups and one chain transfer group such as a mercapto group; (8) polyalkoxysilanes such as polydimethylsiloxane; castor oil polyols; or chlorinated polypropylene polyols.

A method of producing the cationic urethane resin (A-1) applicable to the present invention using the above-described polyisocyanate and polyol is not particularly limited. As an example of incorporating the cationic functional group into the main chain of the urethane resin (A-1), a method including the steps of: synthesizing a urethane resin using the above-described polyisocyanate, polyol and chain-extending agent having a tertiary amino group in its molecule; neutralizing or quaternary-chlorinating the tertiary amino group in the resin; and then dispersing the resin in an aqueous medium can be mentioned (see JP-A-2002-307811). Additionally, a method including the steps of: reacting the above-described polyisocyanate and polyol with a polyamine compound having primary and secondary amino groups to synthesize a urethane resin; neutralizing the secondary amino groups in the resin; and dispersing the resin in an aqueous medium can also be mentioned (see JP-A-2001-64346).

When the cationic urethane resin (A-1) that has cationic functional groups in parts (side chains) branching from the main chain of the resin is used, a degree of freedom of the cationic functional groups is higher. Consequently, an association structure between the resin and the aqueous medium required for forming an aqueous dispersion can be easily formed, thereby producing a more stable aqueous dispersion. Furthermore, anionic sol generated by a sol-gel reaction of the metal alkoxide or condensation product thereof (B) can be sufficiently concentrated onto the surface of the resin particles, thereby producing an aqueous coating composition having excellent storage stability. Therefore, such a cationic urethane resin (A-1) is preferably used in the present invention.

As an example of the cationic urethane resin (A-1) having cationic functional groups in side chains, a cationic urethane resin (a) including a structural unit represented by the following general formula:

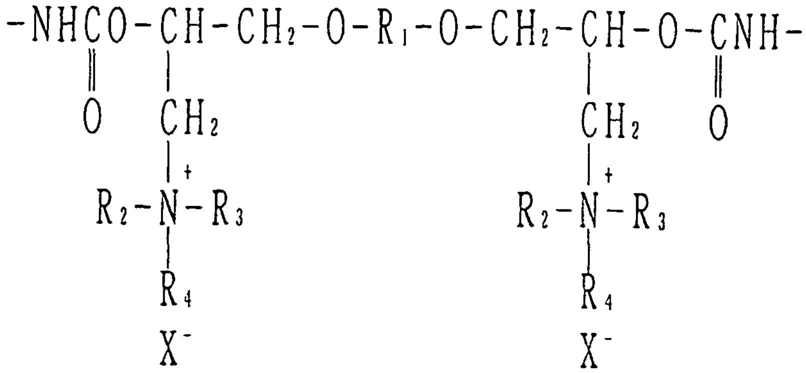

(I)

(wherein $R_1$ represents an alkylene group which may include an alicyclic structure, a residue of a bivalent phenol or a polyoxyalkylene group; $R_2$ and $R_3$ independently represent an alkyl group which may include an alicyclic structure; and $R_4$ represents a hydrogen atom or a residue of a quaternizing agent that is incorporated by a quaternization reaction; and $X^-$ represents an anionic counter ion) can be mentioned.

A method of producing the cationic urethane resin (a) having the structural unit is not particularly limited.

However, a method wherein a tertiary amino group-containing polyol obtained by reacting a compound (a-1) of the following formula [IV] having two epoxy groups in one molecule with a secondary amine (a-2) is reacted with the above-described polyisocyanate is the most useful because the materials used therein are easily-available industrially and cheap.

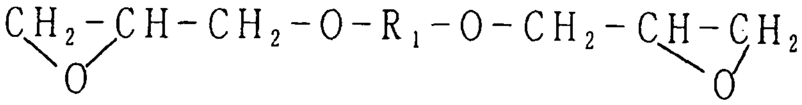 [IV]

(wherein $R_1$ represents an alkylene group which may include an alicyclic structure, a residue of a bivalent phenol or a polyoxyalkylene group.)

As the compound (a-1) having two epoxy groups in one molecule, for example, the following compounds can be used singularly or in combination.

Examples of the compound (a-1) where $R_1$ represents an alkylene group which may include an alicyclic structure in general formula [IV] includes: 1,2-ethanediol-diglycidyl ether, 1,2-propanediol-diglycidyl ether, 1,3-propanediol-diglycidyl ether, 1,4-butanediol-diglycidyl ether, 1,5-pentanediol-diglycidyl ether, 3-methyl-1,5-pentanediol-diglycidyl ether, neopentyl glycol-diglycidyl ether, 1,6-hexanediol-diglycidyl ether, polybutadiene glycol-diglycidyl ether, 1,4-cyclohexanediol-diglycidyl ether, a diglycidyl ether of 2,2-bis(4-hydroxycyclohexyl)-propane (hydrogenated bisphenol A), or a diglycidyl ether of an isomer mixture of hydrogenated-dihydroxydiphenylmethane (hydrogenated bisphenol F).

Examples of the compound (a-1) where $R_1$ represents a residue of a bivalent phenol in general formula [IV] include: resorcinol diglycidyl ether, hydroquinone diglycidyl ether, diglycidyl ether of 2,2-bis(4-hydroxyphenyl)-propane (bisphenol A), diglycidyl ether of an isomer mixture of dihydroxy diphenyl methane (bisphenol F), diglycidyl ether of 4,4-dihydroxy-3,3'-dimethyl diphenyl propane, diglycidyl ether of 4,4-dihydroxy diphenyl cyclohexane, diglycidyl ether of 4,4-dihydroxydiphenyl, diglycidyl ether of 4,4-dihydroxy dibenzophenone, diglycidyl ether of bis(4-hydroxy phenyl)-1,1-ethane, diglycidyl ether of bis(4-hydroxyphenyl)-1,1-isobutane, diglycidyl ether of bis(4-hydroxy-3-tertiary butyl phenyl)-2,2-propane, diglycidyl ether of bis(2-hydroxy naphthyl)methane, diglycidyl ether of bis(4-hydroxyphenyl) sulfone (bisphenol S).

Examples of the compound (a-1) where $R_1$ represents a polyoxyalkylene group in general formula [IV] include: diethylene glycol diglycidyl ether, dipropylene glycol diglycidyl ether, a polyoxyalkylene glycol diglycidyl ether wherein the number of repeating units of oxyalkylene is 3 to 60, such as polyoxyethylene glycol diglycidyl ether, polyoxypropylene glycol diglycidyl ether, diglycidyl ether of an ethylene oxide-propylene oxide copolymer and poly oxytetraethylene glycol diglycidyl ether.

Among the above-described compounds, a polyoxyalkylene glycol diglycidyl ether (where $R_1$ is a polyoxyalkylene group in general formula [IV]) is preferable. In particular, polyoxyethylene glycol diglycidyl ether, polyoxypropylene glycol diglycidyl ether, and a diglycidyl ether of an ethylene oxide-propylene oxide copolymer are preferable.

The epoxy equivalent of polyoxyalkylene glycol diglycidyl ether (where $R_1$ is a polyoxyalkylene group in general formula [IV]) is preferably 1000 g/eq. or less, more preferably 500 g/eq. or less, and most preferably 300 g/eq. or less. This is because adverse influences on mechanical properties or physical properties such as heat properties of the produced composite coating film can be minimized, and control of the cation concentration in the cationic urethane resin (a) can be achieved in a broader range.

As the secondary amine (a-2), any typical compounds can be used. However, a branched or linear aliphatic secondary amine is preferable in terms of ease of controlling the reaction.

Examples of the secondary amine (a-2) include: dimethylamine, diethylamine, di-n-propylamine, diisopropylamine, di-n-butylamine, di-tert-butylamine, di-sec-butylamine, di-n-pentylamine, di-n-peptylamine, di-n-octylamine, diisooctylamine, dinonylamine, diisononylamine, di-n-decylamine, di-n-undecylamine, di-n-dodecylamine, di-n-pentadecylamine, di-n-octadecylamine, di-n-nonadecylamine, and di-n-eicosylamine.

Among the above secondary amines, aliphatic secondary amines having 2-18 carbon atoms (more preferably having 3-8 carbon atoms) are preferable. This is because such amines are hardly volatilized while producing the tertiary amino group-containing polyol, and occurrence of steric hindrance can be prevented while neutralizing a part of or all tertiary amino groups included therein, or quaternizing the amino groups with a quaternizing agent.

The reaction between the compound (a-1) having two epoxy groups in one molecule and the secondary amine (a-2) can be easily conducted without a catalyst at room temperature or under heating such that the compound (a-1) and the secondary amine (a-2) are mixed at an equivalent ratio of epoxy group to NH group [NH group/epoxy group] of preferably 0.5/1 to 1.1/1, and more preferably 0.9/1 to 1/1. In this case, an organic solvent may be used if required.

The reaction temperature is preferably within a range of room temperature to 160°C, and more preferably within a range of 60°C to 120°C. The reaction time is not particularly limited. However, the reaction time is generally within a

range of 30 minutes to 14 hours. The end point of the reaction can be confirmed by disappearance of an absorbance peak around 842 $cm^{-1}$ derived from an epoxy group in infrared spectroscopy (IR method).

With respect to the tertiary amino group-containing polyol obtained by the above-described reaction, a part of or all of the contained tertiary amino groups may be neutralized with an acid or may be quaternized with a quaternizing agent in advance. After that, the tertiary amino group-containing polyol may be reacted with the above-described polyisocyanate. Alternatively, the tertiary amino group-containing polyol may be reacted with the polyisocyanate to produce a polyurethane resin. After that, the tertiary amino groups contained therein may be neutralized or quaternized to produce a cationic urethane resin (a). Furthermore, a step of forming an aqueous dispersion may be performed during or after synthesizing the urethane resin. Whether the step of forming the aqueous dispersion is conducted during or after synthesizing the urethane resin may be determined depending on a type, an amount, among others, of a chain-extending agent, namely an active hydrogen-containing compound such as a polyamine used if required.

The acid used for neutralizing a part of or all of the tertiary amino groups, for example, includes: an organic acid such as formic acid, acetic acid, propionic acid, succinic acid, glutaric acid, butyric acid, lactic acid, malic acid, citric acid, tartaric acid, malonic acid, or adipic acid; an organic sulfonic acid such as sulfonic acid, p-toluenesulfonic acid, or methanesulfonic acid; or an inorganic acid such as hydrochloric acid, sulfuric acid, nitric acid, phosphoric acid, boric acid, phosphorous acid, or hydrofluoric acid. These acids may be used singularly or in combination.

The quaternizing agent used for quaternizing a part of or all of the tertiary amino groups, for example, includes: dialkyl sulfates such as dimethyl sulfate or diethyl sulfate; alkyl halides such as methyl chloride, ethyl chloride, benzyl chloride, methyl bromide, ethyl bromide, benzyl bromide, methyl iodide, ethyl iodide, or benzyl iodide; methyl alkyl- or aryl- sulfonates such as methyl methanesulfonate or methyl p-toluenesulfonate; or epoxies such as ethylene oxide, propylene oxide, butylene oxide, styrene oxide, epichlorhydrin, allyl glycidyl ether, butyl glycidyl ether, 2-ethylhexyl glycidyl ether, or phenyl glycidyl ether. These may be used singularly or in combination.

The amount of the acid or the quaternizing agent for neutralizing or quaternizing the tertiary amino group included therein is not particularly limited. However, the amount thereof is preferably within a range of 0.1 to 3 equivalents, or more preferably within a range of 0.3 to 2.0 equivalents, per one equivalent of the tertiary amino group. This is because such a range can impart excellent dispersion stability to the produced cationic urethane resin (a).

Furthermore, it is preferable that a structural unit containing a silanol group be included in the cationic urethane resin (a) because this will improve water resistance of the produced coating film. When such a structural unit containing a silanol group is included therein, a cross-linking structure is formed between the particles of the cationic urethane resin (a) (i.e. organic component) and the matrix of the inorganic metal oxide (B') formed from the metal alkoxide or condensation product thereof (B). Therefore, a more rigid organic-inorganic composite coating film can be produced.

As an example of the structural unit containing a silanol group, a structural unit represented the following general formula [II] can be mentioned

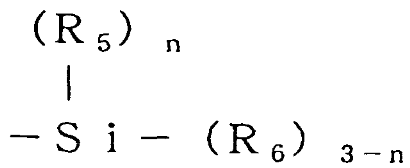

[II]

(wherein $R_5$ represents a hydrogen atom, an alkyl group, an aryl group or an aralkyl group; $R_6$ represents a halogen atom, an alkoxyl group, an acyloxy group, a phenoxy group, an iminoxy group or an alkenyloxy group; and n represents 0, 1 or 2.)

In order to introduce the structural unit represented by general formula [II] into the cationic urethane resin (a), a compound containing a silano group, represented by the following general formula [III] is preferably used.

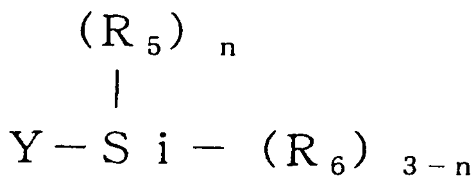

[III]

(wherein $R_5$ represents a hydrogen atom, an alkyl group, an aryl group or an aralkyl group; $R_6$ represents a halogen atom, an alkoxyl group, an acyloxy group, a phenoxy group, an iminoxy group or an alkenyloxy group; n represents 0,

1 or 2; and Y represents an organic residue containing at least one active hydrogen group.)

With regard to the compound represented by general formula [III], a compound where Y is an amino group or mercapto group in general formula [III] is preferable because the compound is easily available. For example, γ-(2-aminoethyl)aminopropyltrimethyoxysilane, γ-(2-hydroxylethyl)aminopropyltrimethoxysilane, γ-(2-aminoethyl)aminopropyltriethoxysilane, γ-(2-hydroxylethyl)aminopropyltriethoxysilane, γ-(2-aminoethyl)aminopropylmethyldimethoxysilane, γ-(2-aminoethyl)aminopropylmethyldiethoxysilane, γ-(2-hydroxylethyl)aminopropylmethyldimethoxysilane, γ-(2-hydroxylethyl)aminopropylmethyldiethoxysilane, γ-(N,N-di-2-hydroxylethyl)aminopropyltriethoxysilane, γ-aminopropyltrimethoxysilane, γ-aminopropyltriethoxysilane, γ-aminopropylmethyldimethoxysilane, γ-aminopropylmethyldiethoxysilane, γ-(N-phenyl)aminopropyltrimethoxysilane, γ-mercaptopropyltrimethoxysilane, or γ-mercaptophenyltrimethoxysilane can be mentioned.

With regard to the amount of the silanol-group-containing compound included therein, the compound is preferably combined such that the structural unit represented by the above general formula [II] is included within a range of 0.1 % to 20% by mass, or preferably 0.5% to 10% by mass with respect to the finally-obtained cationic urethane resin (a). This is because a coating film wherein a metal oxide (B') described below is rigidly combined with the cationic urethane resin (a) can be obtained, and the produced film has excellent water resistance.

If the silanol group-containing compound is combined in the reaction of the above-mentioned polyol containing a tertiary amino group with a polyisocyanate, the silanol groups can be introduced into the produced cationic urethane resin (a).

In brief, the cationic urethane resin (a) can be synthesized by way of reacting the above-mentioned polyol containing a tertiary amino group with a polyisocyanate, and the silanol group-containing compound optionally combined therein. However, the aforementioned other polyols can be combined.

The above-mentioned reaction can be performed without a catalyst. However, typical catalysts such as a tin compound (for example, stannous octoate, dibutyltin dilaurate, dibutyltin dimalate, dibutyltin dipthalate, dibutyltin dimethoxide, dibutyltin diacetylacetate, or dibutyltin diversatate); a titanate compound (for example, tetrabutyl titanate, tetraisopropyl titanate, or triethanolamine titanate); tertiary amines; or a quaternary ammonium salt can be combined.

It is preferable that the organic solvent included in the aqueous dispersion of the cationic urethane resin (a) obtained in the above way be removed, for example, by way of reduced-pressure distillation during or after the reaction, although it is not always required.

The cationic urethane resin (A-1) used in the present invention may contain a reactive functional group such as a hydroxyl group, carboxyl group, or epoxy group as long as the inclusion thereof does not deteriorate the dispersion stability of the resin. Moreover, the cationic urethane resin (A-1) may have a nonionic hydrophilic group such as a polyethylene oxide chain or a polyamide chain in order to enhance its dispersion stability. Furthermore, an emulsifying agent may be combined in order to form a stable aqueous dispersion.

The cationic acrylic resin (A-2) used in the present invention is a water-dispersible-type polyacrylate containing a cationic functional group. With regard to a method of producing such a cationic acrylic resin (A-2), typical methods can be used. For example, a method wherein a mixture of an ethylenic unsaturated monomer having a cationic functional group and an ethylenic unsaturated monomer having no cationic functional group is heat-polymerized in an organic solvent while dropwise adding a radical polymerization initiator; the organic solvent is then removed; the cationic functional groups are neutralized with the aforementioned acid; and the acrylic resin is dispersed in an aqueous medium can be mentioned. In this case, an emulsifying agent can be combined in order to improve stability of the aqueous dispersion.

Furthermore, as a method of synthesizing an aqueous dispersion of the cationic acrylic resin (A-2), an emulsion polymerization method wherein a mixture of a (meth)acrylate containing an amino group, and a (meth)acrylate containing no amino group is heat-polymerized in an aqueous medium while dropwise adding a radical polymerization initiator can be mentioned.

The organic solvent used during the above-described radical polymerization is not particularly limited. For example, aliphatic or alicyclic hydrocarbons such as n-hexane, n-heptane, n-ocatane, cyclohexane, or cyclopentane; aromatic hydrocarbons such as toluene, xylene, or ethylbenzene; alcohols such as methanol, ethanol, n-propyl alcohol, iso-propyl alcohol, n-butyl alcohol, iso-butyl alcohol, or tert-butyl alcohol; glycol ethers such as ethylene glycol monomethyl ether, ethylene glycol monoethyl ether, ethylene glycol monobutyl ether, propylene glycol monomethyl ether, propylene glycol monoethyl ether, or propylene glycol monopropyl ether; esters such as ethyl acetate, n-butyl acetate, n-amyl acetate, ethylene glycol monomethyl ether acetate, or propylene glycol monomethyl ether acetate; ketones such as methyl ethyl ketone, acetone, methyl isobutyl ketone, or cyclohexanone; ethers such as 1,2-dimethoxyethane, tetrahydrofuran, or dioxane; or N-methylpyrrolidone, dimethylformamide, dimethylacetamide or ethylene carbonate can be mentioned. These organic solvents can be used singularly or in combination.

Typical examples of the aforementioned ethylenic unsaturated monomer having a cationic functional group include: vinylpyridines such as vinylpyridine or 2-methyl-5-vinylpyridine; or (meth)acrylic acid esters such as 2-dimethylaminoethyl (meth)acrylate, 2-diethylaminoethyl (meth)acrylate, β-(tert-butylamino)ethyl (meth)acrylate, (meth)acryloxyethyl trimethyl ammonium chloride, or (meth)acrylate dimethylaminoethylbenziyl chloride.

Typical examples of the aforementioned ethylenic unsaturated monomer having no cationic functional group include: acrylic acid or methacrylic acid; acrylic acid alkyl esters (such as methyl acrylate, ethyl acrylate, propyl acrylate, butyl acrylate, isobutyl acrylate, or 2-ethylhexyl acrylate); methacrylic acid alkyl esters (such as methyl methacrylate, ethyl methacrylate, propyl methacrylate, butyl methacrylate, isobutyl methacrylate, or 2-ethylhexyl methacrylate); hydroxyl-group-containing acrylates (such as 2-hydroxylethyyl acrylate, 2-hydroxylpropyl acrylate, or 4-hydroxybutyl acrylate); hydroxyl-group-containing methacrylates (such as 2-hydroxylethyyl methacrylate, 2-hydroxylpropyl methacrylate, or 4-hydroxybutyl methacrylate); amid compounds (such as acrylamide, methacrylamide, N-methylolacrylamide, N-methoxymethylacrylamide, or N-butoxymethylacrylamide); or cyano-group-containing vinyl-based compounds such as acrylonitrile or methacrylonitrile.

Furthermore, in addition to the above-mentioned typical (meth)acryl-based monomers, vinyl-based monomers other than the above (meth)acryl-based monomers can be combined. Examples of such monomers other than the above (meth)acryl-based monomers include: carboxyl-group-containing monomers other than (meth)acrylic acids such as maleic acid, fumaric acid, itaconic acid or crotonic acid; esters of the carboxyl-group-containing monomers other than (meth)acrylic acids and typical monovalent alcohols; crotonic acid derivatives such as crotonitrile, crotonic acid amide or N-substituted derivatives thereof; aromatic vinyl compounds such as styrene or vinyl toluene; vinyl ethers such as methyl vinyl ether, ethyl vinyl ether, butyl vinyl ether, or isobutyl vinyl ether; or vinyl esters such as vinyl formate, vinyl acetate, vinyl propionate, vinyl butyrate, vinyl caproate, vinyl caprylate, vinyl caprate, vinyl laurate, vinyl myristate, vinyl palmitate, vinyl stearate, vinyl cyclohexanecarboxylate, vinyl pivalate, vinyl octylate, vinyl benzoate or vinyl cinnamate.

Examples of the radical-polymerization initiators include: peroxide-based polymerization initiators such as cumene hydroperoxide, di-t-butyl peroxide, benzoyl peroxide, tert-butyl peracetate, or persulfates; or azo-based polymerization initiators such as azobisisobutyronitrile.

[Metal alkoxide (B)]

As a metal included in the metal alkoxide or condensation product thereof (B) used in the present invention, for example, silicon, titanium, or aluminum can be preferably mentioned.

The silicon alkoxide or condensation product thereof is not particularly limited as long as it can be used generally in a sol-gel reaction. For example, tetraalkoxysilanes such as tetramethoxysilane, tetraethoxysilane, tetrapropoxysilane, teraisopropoxysilane or tetrabutoxysilane; trialkoxysilanes such as methyltrimethoxysilane, methyltriethoxysilane, methyltripropoxysilane, methyltributoxysilane, ethyltrimethoxysilane, ethyltriethoxysilane, n-propyltrimethoxysilane, n-propyltriethoxysilane, isopropyltrimethoxysilane, isopropyltriethoxysilane, vinyltrimethoxysilane, vinyltriethoxysilane, 3-glycidoxypropyltrimethoxysilane, 3-glycidoxypropyltriethoxysilane, 3-mercaptopropyltrimethoxysilane, 3-mercaptopropyltriethoxysilane, phenyltrimethoxysilane, phenyltriethoxysilane, 3,4-epoxycyclohexylethyltrimethoxysilane or 3,4-epoxycyclohexylethyltrimethoxysilane; or dimethyldimethoxysilane, dimethyldiethoxysilane, diethyldimethoxysilane, diethyldiethoxysilane or partially-condensed products thereof.

Examples of titanium alkoxides include: titanium isopropoxide, titanium lactate, or titanium triethanol aminate can be mentioned. Additionally, as an example of an aluminum alkoxide, aluminum isopropoxide can be mentioned.

Among the above-mentioned metal alkoxides or condensation products thereof, silicon alkoxides or condensation products thereof are preferable because they are industrially available. In particular, tetramethoxysilane and condensation products thereof are the most preferable. Furthermore, if an alkoxysilane having a functional group which can react with a cationic functional group in the cationic resin (A) is combined, the cross-linking state of the coating film can be densified, and physical properties of the coating film such as water resistance can be further improved. In this case, use of 3-glycidoxypropyltrimethoxysilane is the most preferable.

The ratio of the mass of the cationic resin (A) to the mass of the metal alkoxide or condensation product thereof (B) after hydrolysis-condensation (i.e. mass ratio of (A) /(B1)) is preferably within a range of 10/90 to 70/30, more preferably within a range of 20/80 to 70/30, and most preferably within a range of 30/70 to 70/30. The hydrolysis reaction of the metal alkoxide is represented by the following formula.

$$X(R^1)_m(OR^2)_n + n/2\ H_2O \rightarrow X(R^1)_nO_{m/2} + nR^2OH$$

[wherein $R^1$ is an organic group; $R^2$ is an alkyl group; and X is a metal atom having a valence of (m + n).]

Based on the above formula, the mass (B1) of the metal alkoxide after being completely hydrolyzed and condensed is calculated where the mass (B1) = (addition amount thereof) / (formula mass of the metal alkoxide before the hydrolysis reaction) x (formula mass of the metal alkoxide after the hydrolysis reaction).

[Acid catalyst (C)]

As the acid catalyst (C) of the present invention, typical acid catalysts can be used. For example, inorganic acids such as hydrochloric acid, boric acid, sulfuric acid, hydrofluoric acid or phosphoric acid; or organic acids such as acetic acid, phthalic acid, maleic acid, fumaric acid or p-toluenesulfonic acid can be used. These acids may be used singularly or in combination. In particular, use of maleic acid is preferable because adjustment of pH to a predetermined range is easy, the produced aqueous coating composition has excellent storage stability, and water resistance of the produced organic-inorganic composite coating film is excellent.

The pH of the solution after the acid catalyst (C) is added to the cationic resin (A) is generally within a range of 1.0 to 4.0, preferably within a range of 1.0 to 3.0, and more preferably within a range of 2.0 to 3.0. This is because problems such as corrosion of instruments by the acid hardly occurs, and the produced aqueous coating composition can have excellent storage stability if the pH is within such a range. It is important to adjust the pH to such a range in order to produce an organic-inorganic composite coating film having excellent abrasion resistance and water resistance. In particular, if a commercially-available cationic resin is used as the cationic resin (A), it is preferable that the acid catalyst (C) be added dropwise thereto to adjust the pH.

[Aqueous coating composition]

With regard to the method of preparing the aqueous coating composition of the present invention, a method, including: uniformly mixing the aqueous dispersion of the cationic resin (A) with the acid catalyst (C); then mixing the metal alkoxide or condensation product thereof (B) thereto is the most preferable. Furthermore, an alcohol produced by hydrolysis of the metal alkoxide or condensation product thereof (B) may remain in the produced aqueous coating composition of the present invention, or may be removed by typical methods such as standing or heating under reduced pressure to produce the aqueous coating composition of the present invention.

The aqueous coating composition of the present invention may include additives such as typical thickening agents, wetting agents or thixotropic agents, or fillers as long as effects of the present invention are not impaired. Furthermore, crosslinkers that can react with functional groups in the cationic resin (A) (for example, crosslinkers such as a polyepoxy compound, dialdehyde compound or dicarboxylic acid compound) may be combined.

In addition, the aqueous coating composition of the present invention can be applied as a clear coating composition. However, typical pigment dispersions or dyes may be included therein whereby the aqueous coating composition of the present invention may also be prepared as a colored coating composition.

The ratio of non-volatile contents in the aqueous coating composition of the present invention is not particularly limited. However, the ratio of non-volatile contents is preferably within a range of 10% to 50% by mass because the aqueous coating composition thereof can have excellent storage stability.

A method of coating the aqueous coating composition of the present invention onto materials is not particularly limited. For example, typical coating methods such as an air-spray method, a flow-coater method, or a roll-coater method may be used.

Objects to be coated with the aqueous coating composition of the present invention are not particularly limited. For example, iron, stainless steel, aluminum and the other metals; plastics such as ABS, polycarbonates, PMMA, PET or polystyrene; or glass, wood materials, cement and the other substrates can be mentioned. Additionally, the aqueous coating composition of the present invention can be used to form a film on the surface of powdery or fiber materials.

Furthermore, typical primers, sealing agents, undercoat agents or the like may be coated on the above-described substrate materials in order to achieve improvement in adhesion of the aqueous coating composition to the substrate materials, coloring of the substrate materials, protection of the substrate materials or the like, and then the aqueous coating composition of the present invention can be applied thereon.

The drying conditions after coating are not particularly limited. However, it is preferable that the aqueous coating composition be dried at 20°C to 250°C. It is more preferable that the aqueous coating composition be dried at 60°C to 200°C.

In the organic-inorganic composite coating film of the present invention, particles of the cationic resin (A) are characteristically dispersed in a matrix of the metal oxide (B').

The above-described metal oxide (B') is obtained by a hydrolysis-condensation reaction of the above-described metal alkoxide or condensation product thereof (B). A matrix is formed in the composite coating film. The metal sol is concentrated such that the concentrated metal sol surrounds the surface of fine particles of the cationic resin (A) in the aqueous dispersion, as described. Accordingly, after the aqueous medium is volatilized, the metal sols around the surfaces of the adjacent fine particles are crosslinked, thereby forming such a matrix. Therefore, fine particles of the cationic resin (A) hardly aggregate with each other, and the fine particles are dispersed in the organic-inorganic composite coating film. Such a state of the coating film is obvious in the electron microscopic image of FIG. 1

The method of producing the organic-inorganic composite coating film of the present invention includes: adding

an acid catalyst (C) to a cationic resin (A); then adding a metal alkoxide or condensation product thereof (B) thereto to produce an aqueous coating composition; coating the aqueous coating composition onto a substrate; and drying the aqueous coating composition to produce a composite coating film wherein particles of the cationic resin (A) are dispersed in a matrix of a metal oxide (B'). The production method does not require a specific apparatus. Furthermore, the production method does not utilize water content or the like in the air. That is, the production method does not depend on environments. Accordingly, the applicable scope of the production method is not limited, and the method is industrially simple and useful.

## EXAMPLES

Hereinafter, the present invention will be more specifically described with reference to examples. However, the present invention is not limited to examples. In addition, "part" and "%" mean "part by mass" and "% by mass", respectively, unless specifically defined.

(Synthesis Example 1)

Preparation of aqueous dispersion of cationic urethane resin (A-1-1).

590 parts (epoxy equivalent 201 g/ equivalent) of polypropylene glycol-diglycidyl ether were charged to a four-necked flask equipped with a thermometer, a stirrer, a reflux condenser and a drop feeding device, and then the inside of the flask was substituted with nitrogen. Next, this was heated using an oil bath until the inside of the flask reached 70°C. Then, 378 parts of di-n-butylamine were added dropwise thereto for 30 minutes with the drop feeding device. After the dropwise addition was completed, this was reacted at 90°C for ten hours. After the completion of the reaction, it was confirmed using an infrared spectrophotometer ("FT/IR-460Plus" produced by JASCO International Co.,Ltd.) that an absorbance peak around 842 $cm^{-1}$ derived from epoxy groups disappeared with respect to the reaction product thereof. A tertiary amino group-containing polyol (amine equivalent 339 g/ equivalent; and hydroxyl equivalent 339 g/equivalent) was obtained.

500 parts of "Nipporan 980R" (a polycarbonate polyol produced by Nippon Polyurethane Industry Co., Ltd.; Molecular weight = 2000) and 500 parts of polyester polyol (Molecular weight = 2000) formed with neopentyl glycol/ 1,4-butanediol/terephthalic acid/adipic acid were dissolved in 558 parts of ethyl acetate inside a four-necked flask equipped with a thermometer, a stirrer, a reflux condenser and a drop feeding device. Then, 236 parts of 4,4'-dicyclohexylmethane diisocyanate and 0.2 parts of tin (I) octylate were added thereto, and these were reacted at 75°C for two hours. After that, 66.2 parts of the above-obtained tertiary amino group-containing polyol was added thereto, and this was further reacted for four hours, thereby producing a urethane prepolymer having an isocyanate group at its termini. Then, 478 parts of ethyl acetate and 918 parts of isopropyl alcohol were added to the solution of the urethane prepolymer, and these were uniformly stirred. 17 parts of 80% hydrated hydrazine was added thereto, and a chain-extension reaction was conducted for one hour. Subsequently, 11.7 parts of glacial acetic acid was added to neutralize the solution, and this was water-dispersed by way of dropwise adding 3610 parts of ion-exchange water thereto. The solvent included in the aqueous dispersion was removed under reduced pressure. Finally, an aqueous dispersion of a cationic urethane resin (A-1-1) was obtained where its non-volatile content was 35%; pH was 4.2; its particle diameter was 0.2 μm (measured with a particle size analyzer "FPAR-1000" produced by Otsuka Electronic Group); and its cationic equivalent was 0.15 equivalents/kg.

(Synthesis Example 2)

Preparation of aqueous dispersion of cationic urethane resin (A-1-2).

1000 parts of "Nipporan 980R" were dissolved in 600 parts of ethyl acetate inside a four-necked flask equipped with a thermometer, a stirrer, a reflux condenser and a drop feeding device. Then, 262 parts of 4,4'-dicyclohexylmethane diisocyanate and 0.2 part of tin (I) octylate were added thereto, and these were reacted at 75°C for two hours. After that, 95 parts of the above-obtained tertiary amino group-containing polyol was added thereto, and this was further reacted for four hours, and cooled to 60°C. 44 parts of"Z-6011" (γ-aminopropyltriethoxysilane produced by Dow Corning Toray Co., Ltd.) was added thereto, and this was further reacted for one hour, thereby producing a urethane prepolymer having an isocyanate group at its termini. Then, 515 parts of ethyl acetate and 986 parts of isopropyl alcohol were added to the solution of the urethane prepolymer, and these were uniformly stirred. 15 parts of 80% hydrated hydrazine was added thereto, and a chain-extension reaction was conducted for one hour. Subsequently, 16.8 parts of glacial acetic acid was added to neutralize the solution, and this was water-dispersed by way of dropwise adding 3800 parts of ion-exchange water thereto. The solvent included in the aqueous dispersion was removed under reduced pressure. Finally, an aqueous

dispersion of a cationic urethane resin (A-1-2) was obtained where its non-volatile content was 35%; pH was 4.1; its particle diameter was 0.15 μm; and its cationic equivalent was 0.2 equivalents/kg.

(Synthesis Example 3)

Preparation of aqueous dispersion of cationic urethane resin (A-1-3).

640 parts of "Nipporan 980R" were dissolved in 390 parts of methyl ethyl ketone inside a four-necked flask equipped with a thermometer, a stirrer, a reflux condenser and a drop feeding device. Then, 133 parts of isophorone diisocyanate and 0.2 part of tin (I) octylate were added thereto, and these were reacted at 75°C for two hours. After that, 122 parts of the above-obtained tertiary amino group-containing polyol was added thereto, and this was further reacted for four hours, and cooled to 60°C. 22 parts of "Z-6011" was added thereto, and this was further reacted for one hour, thereby producing a urethane prepolymer having an isocyanate group at its termini. Then, 45 parts of dimethyl sulfate was added to the solution of the urethane prepolymer, and this was further reacted at 60°C for two hours to quaternize it. Then, this was water-dispersed by way of dropwise adding 2080 parts of ion-exchange water thereto. The solvent included in the aqueous dispersion was removed under reduced pressure. Finally, an aqueous dispersion of cationic urethane resin (A-1-3) particles was obtained where its non-volatile content was 35%; pH was 6.5; its particle diameter was 0.05 μm; and its cationic equivalent was 0.39 equivalents/kg.

(Synthesis Example 4)

Preparation of aqueous dispersion of cationic acrylic resin (A-2-1).

12 parts of methacryloxyethyltrimethyl ammonium chloride, 0.4 parts of n-dodecyl mercaptane, 1 part of 2,2'-azobis(2-methylpropionamidine) dihydrochloride, and 540 parts of ion-exchange water were charged to a reaction vessel equipped with a stirrer, thermometer, a dropping funnel, a reflux condenser, an inert-gas-injecting vessel and a discharging vessel thereof while injecting nitrogen thereto, and the inside of the reaction vessel was heated to 80°C while stirring. This was maintained at 80°C for one hour to conduct the reaction, thereby producing a reaction product. Then, a monomer mixture (220 parts of butyl acrylate and 180 parts of methyl methacrylate) prepared in another container in advance, and 40 parts of a polymerization initiator solution (5% aqueous solution of 2,2'-azobis(2-methylpropionamidine) dihydrochloride) were added dropwise to the reaction vessel, where the above reaction product was present, separately from separate dropping funnels for three hours, and the monomers were polymerized. The temperature inside the reaction vessel was maintained at 80°C during dropwise addition thereof. After the dropwise addition thereof was completed, the temperature was further maintained at 80°C for one hour while stirring, and then, this was cooled to 25°C. Then, ion-exchange water was added thereto to adjust the non-volatile content to 35%, and an aqueous dispersion of a cationic acrylic resin (A-2-1) was obtained where pH was 3.5; its particle diameter was 0.3 μm; and its cationic equivalent was 0.14 equivalents/kg.

(Synthesis Example 5)

Preparation of aqueous dispersion of cationic acrylic resin (A-2-2).

425 parts of propylene glycol-n-propyl ether was charged to a reaction vessel equipped with a stirrer, thermometer, a dropping funnel, a reflux condenser, an inert-gas-injecting vessel and a discharging vessel thereof. This was maintained at 100°C while stirring in an atmosphere of nitrogen, and a mixture (total 500 parts) of 35 parts of dimethylaminoethyl methacrylate, 300 parts of methyl methacrylate and 165 parts of butyl acrylate was added dropwise slowly for about three hours. Simultaneously, a solution containing 10 parts of t-butylperoxy-2-ethylhexanoate (product name "perbutyl O" produced by NOF CORPORATION) and 65 parts of propylene glycol-n-propyl ether was added dropwise slowly for about three hours. One hour after the dropwise addition, a solution containing 2.5 parts of "perbutyl O" and 10 parts of propylene glycol-n-propyl ether was added thereto, and the temperature of the solution was maintained at 100°C for three hours to complete the polymerization reaction. Subsequently, 13.5 parts of glacial acetic acid was added thereto, and sufficiently stirred to neutralize the solution. This was water-dispersed by way of dropwise adding 980 parts of ion-exchange water thereto. The solvent included in the aqueous dispersion was removed under reduced pressure. Finally, an aqueous dispersion of a cationic acrylic resin (A-2-2) was obtained where its non-volatile content was 35%; pH was 5.8; its particle diameter was 0.1 μm; and its cationic equivalent was 0.44 equivalents/kg.

(Comparative Synthesis Example 1)

116 parts of hexamethylene diamine was charged to a reaction vessel equipped with a stirrer, a thermometer, a reflux condenser, an inert-gas-injecting vessel and a discharging vessel thereof. This was maintained at 50°C while stirring in an atmosphere of nitrogen, and 210 parts of propylene carbonate was added thereto dropwise slowly for about one hour. The reaction vessel was maintained at 90°C to 100°C, and the reaction was conducted for twenty hours. Finally, a white wax-like soft solid of a bishydroxyl carbamate of hexamethylene diamine (hereinafter, referred to as "A'-1") was obtained. Based on the results of acidimetry, it was confirmed that its amine content was 0.1 % or less.

(Comparative Synthesis Example 2)

425 parts of propylene glycol-n-propyl ether was charged to a reaction vessel equipped with a stirrer, a thermometer, a dropping funnel, a reflux condenser, an inert-gas-injecting vessel and a discharging vessel thereof. This was maintained at 100°C while stirring in an atmosphere of nitrogen, and a mixture (total 500 parts) of 100 parts of dimethylaminoethyl methacrylate, 260 parts of methyl methacrylate, and 140 parts of butyl acrylate was added thereto dropwise slowly for about three hours. Simultaneously, a solution containing 10 parts of "Perbutyl O" and 65 parts of propylene glycol-n-propyl ether was added thereto dropwise slowly for about three hours. One hour after the dropwise addition was completed, a solution containing 2.5 parts of "Perbutyl O" and 10 parts of propylene glycol-n-propyl ether was further added thereto, and the temperature of the solution was maintained at 100°C for three hours to complete the polymerization reaction. Subsequently, 38.2 parts of glacial acetic acid was added thereto, and sufficiently stirred to neutralize the solution. 980 parts of ion-exchange water was added dropwise thereto, and this was stirred. The solvent included in the aqueous dispersion was removed under reduced pressure. Finally, a transparent aqueous solution of a cationic acrylic resin (A'-2) was obtained where its non-volatile content was 35%; pH was 6.0; and its cationic equivalent was 1.27 equivalents/kg.

[Coating composition]

(Example 1)

20 parts of the aqueous dispersion of the cationic urethane resin (A-1-1) obtained in Synthesis Example 1, 5 parts of ion-exchange water and 8 parts of 2-propanol (hereinafter, referred to as "IPA") were mixed by way of stirring. Then, 7 parts of a 10% maleic acid aqueous solution was dropwise added thereto. At this time, the pH of the mixture solution was 1.6. While continuously stirring, a mixture solution containing 14.4 parts of a tetramethoxysilane condensation product ("Methylsilicate 51" produced by Tama Chemicals Co., Ltd.; hereinafter, referred to as "MS-51") and 4.3 parts of 3-glycidoxypropyltrimethoxysilane (hereinafter, referred to as "GPTMS") was added thereto dropwise. The solution was stirred for one hour, thereby producing an aqueous coating composition (1).

(Examples 2 to 23)

Aqueous coating compositions (2) to (23) were produced in the same manner as Example 1 except that their compositions were as presented in Tables 1 to 3.

(Comparative Example 1)

15 parts of the hydroxyl-group-containing polymer (A'-1) synthesized in Comparative Synthesis Example 1, 15 parts of ion-exchange water, and 5 parts of methanol were mixed to produce a solution. To the solution, 20 parts of tetraethoxysilane (hereinafter, referred to as "TEOS"), 0.5 parts of a melamine resin "CYMEL 303'' (produced by Cytec Industries Inc.) as a curing agent were added to produce a uniform solution. 0.3 parts of concentrated hydrochloric acid was added to the solution as a catalyst, and the solution was heated at about 30°C for one hour to produce a comparative aqueous coating composition (1').

(Comparative Example 2)

20 parts of an aqueous solution of the cationic urethane resin (A-2') obtained in Comparative Synthesis Example 2, 8.5 parts of ion-exchange water, and 8 parts of IPA were mixed by way of stirring. Then, 3.9 parts of a 10% maleic acid aqueous solution was dropwise added thereto. At this time, the pH of the mixture solution was 2.3. While continuously stirring, a mixture solution containing 14.4 parts of "MS-51" and 4.3 parts of GPTMS was added thereto dropwise. The solution was stirred for one hour, thereby producing a comparative aqueous coating composition (2').

(Method of evaluating stability of aqueous coating compositions)

The aqueous coating compositions obtained in Examples 1 to 23 and Comparative Examples 1 and 2 were stored at 23°C, and the number of days required for gelation was confirmed by visual inspection with respect to the liquid state of each aqueous coating composition.

Table 1 Composition (parts) of aqueous coating composition and results of stability evaluation (cationic urethane resin A-1)

| Example | 1 | 2 | 3 | 4 | 5 | 6 | 7 | 8 | 9 |
|---|---|---|---|---|---|---|---|---|---|
| Aqueous coating composition | 1 | 2 | 3 | 4 | 5 | 6 | 7 | 8 | 9 |
| A-1-1 aqueous dispersion | 20.0 | 20.0 | 20.0 | 20.0 | 20.0 | 20.0 | 20.0 | 20.0 | 20.0 |
| Ion-exchange water | 5.0 | 8.5 | 8.5 | 8.5 | 8.5 | 8.5 | 8.5 | 8.5 | 9.9 |
| IPA | 8.0 | 8.0 | 8.0 | 8.0 | 8.0 | 8.0 | 8.0 | 8.0 | 8.0 |
| 10% maleic acid aqueous solution | 7.0 | 3.5 | 3.5 | 3.5 | 3.5 | 3.5 | 3.5 | 3.5 | 2.0 |
| 2 mol/L hydrochloric acid | | | | | | | | | 0.05 |
| MS-51 | 14.4 | 14.4 | 12.3 | 22.0 | 11.0 | 8.3 | | 14.4 | 14.4 |
| TEOS | | | | | | | 25.5 | | |
| GPTMS | 4.3 | 4.3 | 5.8 | 6.6 | 2.0 | 0.6 | 4.5 | | 4.3 |
| MTMS | | | | | | | | 6.4 | |
| (A) / (B1) | 40/60 | 40/60 | 40/60 | 30/70 | 50/50 | 60/40 | 40/60 | 40/60 | 40/60 |
| pH (before addition of B) | 1.6 | 2.3 | 2.3 | 2.3 | 2.3 | 2.3 | 2.3 | 2.3 | 2.2 |
| Stability | 8 | 6 | 7 | 4 | 8 | 12 | 8 | 5 | 3 |

Table 2 Composition (parts) of aqueous coating composition and results of stability evaluation (cationic urethane resin A-1)

| Example | 10 | 11 | 12 | 13 | 14 | 15 | 16 |
|---|---|---|---|---|---|---|---|
| Aqueous coating composition | 10 | 11 | 12 | 13 | 14 | 15 | 16 |
| A-1-2 aqueous dispersion | 20.0 | 20.0 | 20.0 | | | | |
| A-1-3 aqueous dispersion | | | | 20.0 | 20.0 | 20.0 | |

(continued)

| Example | 10 | 11 | 12 | 13 | 14 | 15 | 16 |
|---|---|---|---|---|---|---|---|
| SF650 | | | | | | | 27.0 |
| Ion-exchange water | 8.5 | 8.5 | 8.5 | 8.5 | 8.5 | 8.5 | 1.5 |
| IPA | 8.0 | 8.0 | 8.0 | 8.0 | 8.0 | 8.0 | 8.0 |
| 10% maleic acid aqueous solution | 3.5 | 3.5 | 3.5 | 3.8 | 3.8 | 3.8 | 3.9 |
| MS-51 | 14.4 | 11.0 | 8.3 | 14.4 | 11.0 | 8.3 | 14.4 |
| GPTMS | 4.3 | 2.0 | 0.6 | 4.3 | 2.0 | 0.6 | 4.3 |
| (A) / (B1) | 40/60 | 50/50 | 60/40 | 40/60 | 50/50 | 60/40 | 40/60 |
| pH (before addition of B) | 2.3 | 2.3 | 2.3 | 2.4 | 2.4 | 2.4 | 2.6 |
| Stability | 6 | 8 | 10 | 6 | 8 | 10 | 6 |

Table 3 Composition (parts) of aqueous coating composition and results of stability evaluation (cationic acrylic resin A-2)

| Example | 17 | 18 | 19 | 20 | 21 | 22 | 23 |
|---|---|---|---|---|---|---|---|
| Aqueous coating composition | 17 | 18 | 19 | 20 | 21 | 22 | 23 |
| A-2-1 aqueous dispersion | 20.0 | 20.0 | 20.0 | | | | |
| A-2-2 aqueous dispersion | | | | 20.0 | 20.0 | 20.0 | |
| UW550CS | | | | | | | 20.5 |
| Ion-exchange water | 8.5 | 8.5 | 8.5 | 8.5 | 8.5 | 8.5 | 8.0 |
| IPA | 8.0 | 8.0 | 8.0 | 8.0 | 8.0 | 8.0 | 8.0 |
| 10% maleic acid aqueous solution | 3.1 | 3.1 | 3.1 | 3.8 | 3.8 | 3.8 | 3.5 |
| MS-51 | 14.4 | 11.0 | 8.3 | 14.4 | 11.0 | 8.3 | 14.4 |
| GPTMS | 4.3 | 2.0 | 0.6 | 4.3 | 2.0 | 0.6 | 4.3 |
| (A) / (B1) | 40/60 | 50/50 | 60/40 | 40/60 | 50/50 | 60/40 | 40/60 |
| pH (before addition of B) | 2.3 | 2.3 | 2.3 | 2.4 | 2.4 | 2.4 | 2.5 |
| Stability | 5 | 8 | 14 | 4 | 7 | 10 | 5 |

Table 4 Composition (parts) of aqueous coating composition and results of stability evaluation (Comparative Examples)

| Comparative Example | 1 | 2 |
|---|---|---|
| Aqueous coating composition | 1’ | 2’ |
| A’-1 | 15.0 | |
| A’-2 aqueous solution | | 20.0 |
| Ion-exchange water | 15.0 | 8.5 |
| Methanol | 5.0 | |
| IPA | | 8.0 |
| Concentrated hydrochloric acid | 0.3 | |
| 10% maleic acid aqueous solution | | 3.9 |
| TEOS | 20.0 | |
| MS-51 | | 14.4 |
| GPTMS | | 4.3 |
| CYMEL 303 | 0.5 | |
| (A’) / (B1) | 72/28 | 40/60 |
| Stability | 1 | 2 |

Footnotes to Tables 1 to 4:

(A)/(B1) is a ratio of mass of the cationic reisn (A) to mass (B1) of the metal alkoxide or condensation product thereof (B) after hydrolysis-condensation;
"SF 650" is an aqueous dispersion of a cationic urethane resin "Superflex 650" produced by Dai-Ichi Kogyo Seiyaku Co., Ltd., whose non-volatile content is 25% and whose average particle diameter is 0.01 μm;
"UW550CS" is an aqueous dispersion of a cationic acrylic resin "ACRIT UW550-CS" produced by Taisei Chemical Industries, Ltd., whose non-volatile content is 34% and whose average particle diameter is 0.04 μm; and
"MTMS" refers to methyltrimethoxysilane.

[Coating film]

(Examples 24 to 46)

Each of the aqueous coating compositions (1) to (23) obtained in Examples 1 to 23 was applied onto a polycarbonate film (product name "Iupilon®" produced by MITSUBISHI GAS CHEMICAL COMPANY, INC.; 100 μm thick). Then, this was dried at 130°C for 30 minutes, thereby producing an organic-inorganic composite coating film (Coating films 1 to 23) about 5 μm thick.

(Comparative Examples 3 to 4)

Each of the aqueous coating compositions obtained in Comparative Examples 1 and 2 was applied onto a polycarbonate film (product name "Iupilon®" produced by MITSUBISHI GAS CHEMICAL COMPANY, INC.; 100 μm thick). Then, this was dried at 130°C for 30 minutes, thereby producing a comparative organic-inorganic composite coating film (Comparative coating films 1 and 2) about 5 μm thick.

(Examples 47 to 51)

The aqueous coating compositions (2), (10), (13), (17) and (20) obtained in Examples 2, 10, 13, 17 and 20 were applied onto polycarbonate films (product name "Iupilon®" produced by MITSUBISHI GAS CHEMICAL COMPANY, INC.; 100 μm thick). Then, these were dried at 80°C for 30 minutes, thereby producing organic-inorganic composite coating films (Coating films 24 to 28) about 5 μm thick.

(Examples 52 to 56)

The aqueous coating compositions (2), (10), (13), (17) and (20) obtained in Examples 2, 10, 13, 17 and 20 were applied onto polycarbonate films (product name "Iupilon®" produced by MITSUBISHI GAS CHEMICAL COMPANY, INC.; 100 μm thick). Then, these were dried at 23°C for 24 hours, thereby producing organic-inorganic composite coating films (Coating films 29 to 33) about 5 μm thick.

The measurement results of physical properties are shown in Tables 5 to 10 with respect to the produced coating films 1 to 33 and comparative coating films 1 and 2. In addition, the evaluation of the coating films was based on the following methods.

(Abrasion resistance)

The evaluation was conducted using a "gakushin"-type rubbing tester ("RT-200" produced by DAIEI KAGAKU SEIKI MFG. CO., LTD). The rubbing material was a steel wool (product name "Bonstar" (product No. 0000) produced by Nihon Steel Wool Co., Ltd.); the loading weight was 500 g; and the reciprocation was 250 times. The numbers in Tables refer to differences in turbidity between before and after the evaluation. The smaller the number is, the more excellent the abrasion resistance.

(Water resistance)

The coating film was immersed in hot water at 40°C, and whether there were changes in the state of the surface of the coating film was confirmed by visual inspection. "Excellent" refers to no change after a two-week immersion;

"Fair" refers to no change after a one-week immersion; and
"Inferior" refers to occurrence of whitening or cracks in the coating film after a one-week immersion.

(State of coating film)

The state of the coating film was visually evaluated.

"Excellent" means that the coating film was transparent; and
"Inferior" means that cracks occurred in the coating films.

Table 5 Evaluation results of Organic-Inorganic composite coating films

| Example | 24 | 25 | 26 | 27 | 28 | 29 | 30 | 31 | 32 |
|---|---|---|---|---|---|---|---|---|---|
| Coating film | 1 | 2 | 3 | 4 | 5 | 6 | 7 | 8 | 9 |
| Aqueous coating composition | 1 | 2 | 3 | 4 | 5 | 6 | 7 | 8 | 9 |
| Abrasion resistance | 6.6 | 5.5 | 6.1 | 4.5 | 5.9 | 6.6 | 5.9 | 6.1 | 4.8 |
| Water resistance | Excellent | Excellent | Excellent | Fair | Excellent | Excellent | Excellent | Fair | Fair |
| State of coating film | Excellent | Excellent | Excellent | Excellent | Excellent | Excellent | Excellent | Excellent | Excellent |

Table 6 Evaluation results of Organic-Inorganic composite coating films

| Example | 33 | 34 | 35 | 36 | 37 | 38 | 39 |
|---|---|---|---|---|---|---|---|
| Coating film | 10 | 11 | 12 | 13 | 14 | 15 | 16 |
| Aqueous coating composition | 10 | 11 | 12 | 13 | 14 | 15 | 16 |
| Abrasion resistance | 4.6 | 4.9 | 5.6 | 2.2 | 2.9 | 3.6 | 6.8 |
| Water resistance | Excellent | Excellent | Excellent | Excellent | Excellent | Excellent | Excellent |
| State of coating film | Excellent | Excellent | Excellent | Excellent | Excellent | Excellent | Excellent |

Table 7 Evaluation results of Organic-Inorganic composite coating films

| Example | 40 | 41 | 42 | 43 | 44 | 45 | 46 |
|---|---|---|---|---|---|---|---|
| Coating film | 17 | 18 | 19 | 20 | 21 | 22 | 23 |
| Aqueous coating composition | 17 | 18 | 19 | 20 | 21 | 22 | 23 |
| Abrasion resistance | 4.8 | 5.2 | 5.7 | 3.2 | 3.6 | 4.1 | 4.3 |
| Water resistance | Excellent | Excellent | Excellent | Excellent | Excellent | Excellent | Excellent |
| State of coating film | Excellent | Excellent | Excellent | Excellent | Excellent | Excellent | Excellent |

Table 8 Evaluation results of Organic-Inorganic composite coating films

| Example | 47 | 48 | 49 | 50 | 51 |
|---|---|---|---|---|---|
| Coating film | 24 | 25 | 26 | 27 | 28 |
| Aqueous coating composition | 2 | 10 | 13 | 17 | 20 |
| Abrasion resistance | 8.3 | 7.7 | 4.1 | 8.9 | 4.9 |
| Water resistance | Excellent | Excellent | Excellent | Excellent | Excellent |
| State of coating film | Excellent | Excellent | Excellent | Excellent | Excellent |

Table 9 Evaluation results of Organic-Inorganic composite coating films

| Example | 52 | 53 | 54 | 55 | 56 |
|---|---|---|---|---|---|
| Coating film | 29 | 30 | 31 | 32 | 33 |
| Aqueous coating composition | 2 | 10 | 13 | 17 | 20 |
| Abrasion resistance | 9.9 | 8.7 | 6.6 | 10.2 | 6.9 |
| Water resistance | Fair | Fair | Excellent | Fair | Excellent |
| State of coating film | Excellent | Excellent | Excellent | Excellent | Excellent |

Table 10 Evaluation results of Organic-Inorganic composite coating films

| Comparative Example | 3 | 4 |
|---|---|---|
| Coating film | 1' | 2' |
| Aqueous coating composition | 1' | 2' |

(continued)

| Comparative Example | 3 | 4 |
|---|---|---|
| Abrasion resistance | 30.0 | 4.8 |
| Water resistance | Fair | Inferior |
| State of coating film | Excellent | Inferior |

The cross-section of the organic-inorganic composite coating film 13 obtained in Example 36 was observed with a transmission electron microscope ("JEM-2200FS" produced by JEOL Ltd.). The captured image is shown in FIG. 1. In the image, it was confirmed that fine particles of a cationic resin were dispersed uniformly in the coating film. It was confirmed that such fine particles of cationic resins were dispersed uniformly in the other coating films of Examples.

INDUSTRIAL APPLICABILITY

The organic-inorganic composite coating film of the present invention can be utilized for various purposes such as in vehicles, building materials, wood-working, or plastic hard coating, and its applicability is very broad. Therefore, the aqueous coating composition, the organic-inorganic composite coating film produced using the same, and the production method thereof have high industrial applicability in various industrial fields.

## Claims

1. An aqueous coating composition, comprising:

   an aqueous dispersion of a cationic resin (A);
   a metal alkoxide or a condensation product thereof (B); and
   an acid catalyst (C).

2. The aqueous coating composition according to Claim 1, wherein the cationic resin (A) is a cationic urethane resin (A-1) or a cationic acrylic resin (A-2).

3. The aqueous coating composition according to Claim 2, wherein the cationic urethane resin (A-1) is a cationic urethane resin (a) including a structural unit represented by the following general formula (I):

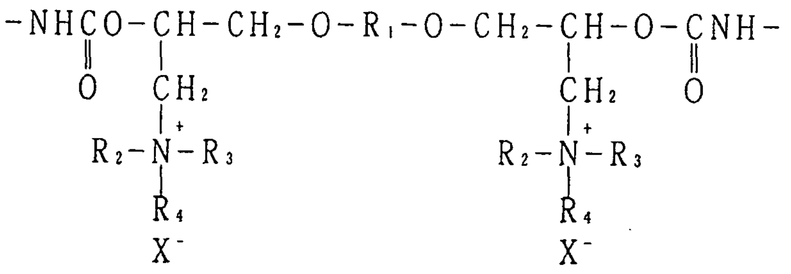

(I)

wherein $R_1$ represents an alkylene group which may include an alicyclic structure, a residue of a bivalent phenol or a polyoxyalkylene group; $R_2$ and $R_3$ independently represent an alkyl group which may include an alicyclic structure; and $R_4$ represents a hydrogen atom or a residue of a quaternizing agent that is incorporated by a quaternization reaction; and $X^-$ represents an anionic counter ion.

4. The aqueous coating composition according to Claim 3 , wherein the cationic urethane resin (a) includes a structural unit represented by the following general formula (II):

$$\begin{array}{l} (R_5)_n \\ \ \ | \\ -Si-(R_6)_{3-n} \end{array} \qquad [II]$$

wherein $R_5$ represents an a hydrogen atom, an alkyl group, an aryl group or an aralkyl group; $R_6$ represents a halogen atom, an alkoxy group, an acyloxy group, a phenoxy group, an iminoxy group or an alkenyloxy group; and n represents 0, 1 or 2.

**5.** The aqueous coating composition according to Claim 1, wherein an average particle diameter of a fine particle of the cationic resin (A) in the aqueous dispersion of the cationic resin (A) is within a range of 0.01 μm to 0.4 μm.

**6.** The aqueous coating composition according to Claim 1, wherein the metal alkoxide or the condensation product thereof (B) is a silicon alkoxide or a condensation product thereof.

**7.** The aqueous coating composition according to any one of Claims 1 to 6, wherein the mass ratio (A) / (B1) of the mass of the cationic resin (A) to the mass (B1) of the metal alkoxide or the condensation production thereof (B) after hydrolysis-condensation is within a range of 10/90 to 70/30.

**8.** An organic-inorganic composite coating film wherein particles of a cationic resin (A) are dispersed in a matrix of a metal oxide (B').

**9.** A method of producing an organic-inorganic composite coating film, comprising:

adding an acid catalyst (C) to an aqueous dispersion of a cationic resin (A);
then adding thereto a metal alkoxide or a condensation product thereof (B) to produce an aqueous coating composition;
coating the aqueous coating composition onto a substrate; and
drying the aqueous coating composition to produce a composite coating film in which particles of the cationic resin (A) are dispersed in a matrix of a metal oxide (B').

FIG. 1

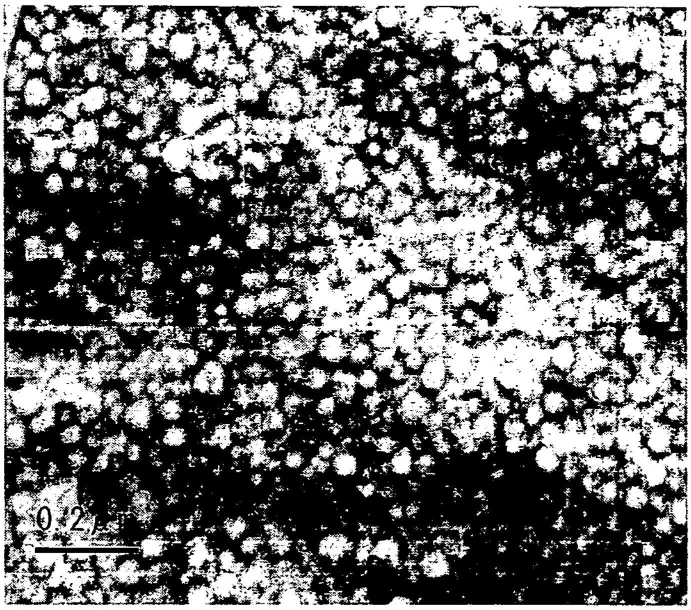

**INTERNATIONAL SEARCH REPORT**

International application No.
PCT/JP2006/324728

A. CLASSIFICATION OF SUBJECT MATTER
*C09D1/00*(2006.01)i, *B05D7/24*(2006.01)i, *C09D5/02*(2006.01)i, *C09D7/12*(2006.01)i, *C09D133/00*(2006.01)i, *C09D175/04*(2006.01)i, *C09D183/04*(2006.01)i

According to International Patent Classification (IPC) or to both national classification and IPC

B. FIELDS SEARCHED

Minimum documentation searched (classification system followed by classification symbols)
C09D1/00, B05D7/24, C09D5/02, C09D7/12, C09D133/00, C09D175/04, C09D183/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X<br>P,A | WO 2006/126394 A1 (Nihon Parkerizing Co., Ltd.),<br>30 November, 2006 (30.11.06),<br>Claims; examples<br>(Family: none) | 1,2,5-9<br>3,4 |
| X<br>A | JP 8-231856 A (Chuo Rika Kogyo Corp.),<br>10 September, 1996 (10.09.96),<br>Claims; Par. No. [0035]<br>(Family: none) | 1,2,5-9<br>3,4 |
| X<br>A | JP 2003-105562 A (NKK Corp.),<br>09 April, 2003 (09.04.03),<br>Claims; examples<br>(Family: none) | 1,2,5-9<br>3,4 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| | |
|---|---|
| Date of the actual completion of the international search<br>13 March, 2007 (13.03.07) | Date of mailing of the international search report<br>20 March, 2007 (20.03.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/324728

C (Continuation). DOCUMENTS CONSIDERED TO BE RELEVANT

| Category* | Citation of document, with indication, where appropriate, of the relevant passages | Relevant to claim No. |
|---|---|---|
| E,X<br>E,A | JP 2006-342419 A (JFE Steel Corp.),<br>21 December, 2006 (21.12.06),<br>Table 20, invention examples 75, 76<br>(Family: none) | 1,2,5-9<br>3,4 |
| P,A | WO 2006/011512 A1 (Dainippon Ink And Chemicals, Inc.),<br>02 February, 2006 (02.02.06),<br>Full text<br>(Family: none) | 1-9 |
| X<br>A | JP 2004-156081 A (JFE Steel Corp.),<br>03 June, 2004 (03.06.04),<br>Claims; examples<br>(Family: none) | 1,2,5-9<br>3,4 |
| X<br>A | JP 2004-18887 A (JFE Steel Corp.),<br>22 January, 2004 (22.01.04),<br>Claims; examples<br>(Family: none) | 1,2,5-9<br>3,4 |
| P,X<br>P,A | JP 2006-328445 A (Nihon Parkerizing Co., Ltd.),<br>07 December, 2006 (07.12.06),<br>Claims; examples<br>(Family: none) | 1,2,5-9<br>3,4 |
| X<br>A | JP 2005-120469 A (Nihon Parkerizing Co., Ltd.),<br>12 May, 2005 (12.05.05),<br>Claims; examples<br>& CN 1614089 A | 1,2,5-9<br>3,4 |
| X<br>A | JP 2003-13252 A (Nihon Parkerizing Co., Ltd.),<br>15 January, 2003 (15.01.03),<br>Claims; examples<br>& WO 2003/000953 A1 & EP 1426466 A1<br>& US 2004-167266 A1 | 1,2,5-9<br>3,4 |
| P,X<br>P,A | JP 2006-152436 A (Nihon Parkerizing Co., Ltd.),<br>15 June, 2006 (15.06.06),<br>Claims<br>& WO 2006/043727 A1 | 1,2,4-9<br>3 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H6136321 B
- JP 2001064346 A
- JP H8319457 B
- JP 2002307811 A

### Non-patent literature cited in the description

- Silicon Biomineralization: Biology-Biotechnology-Molecular Biology-Biotechnology. Springer, 2003